Europäisches Patentamt

European Patent Office

Office européen des brevets

(19)

(11) **EP 0 503 284 B1**

(12) **EUROPÄISCHE PATENTSCHRIFT**

(45) Veröffentlichungstag und Bekanntmachung des Hinweises auf die Patenterteilung:
**24.04.1996 Patentblatt 1996/17**

(51) Int Cl.⁶: **H04L 12/56**, H04Q 3/68

(21) Anmeldenummer: **92102214.1**

(22) Anmeldetag: **10.02.1992**

(54) **Dreistufige, zumindest gedoppelte ATM-Koppelanordnung**

A three-stage, at least duplicated ATM-self-routing coupling arrangement

Dispositif de couplage à auto-acheminement à trois étages avec au moins une structure dédoublée

(84) Benannte Vertragsstaaten:
**AT BE CH DE ES FR GB IT LI NL SE**

(30) Priorität: **14.03.1991 EP 91103976**

(43) Veröffentlichungstag der Anmeldung:
**16.09.1992 Patentblatt 1992/38**

(73) Patentinhaber: **SIEMENS AKTIENGESELLSCHAFT D-80333 München (DE)**

(72) Erfinder: **Göldner, Ernst-Heinrich, Dr. W-8000 München 90 (DE)**

(56) Entgegenhaltungen:
EP-A- 0 384 961          EP-A- 0 412 343
US-A- 4 400 627

- **IEEE INFOCOM '90 , SAN FRANSISCO , CA, US; WASHINGTON, US Seiten 668 - 676; S. LIEW ET AL.: 'Performance Analysis of Asymmetric Packet Switch Modules with Channel Grouping'**
- **ELECTRONICS LETTERS. Bd. 26, Nr. 16, August 1990, ENAGE GB Seiten 1286 - 1287; H.OBARA ET AL.: 'Self-routing fast packet switch with in-service modulator growth'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

In neueren Enwicklungen der Fernmeldetechnik - und hier in der Entwicklung diensteintegrierender Breitbandnetze (B-ISDN) - spielt der auf asynchroner Zeitmultiplextechnik basierende Asynchrone Transfer-Modus (ATM) eine wesentliche Rolle, demzufolge die Signalübertragung in einem Bitstrom vor sich geht, der in - jeweils aus Kopf und Nutzinformationsteil bestehende - Zellen konstanter Länge von z.B. 53 Oktetts unterteilt ist, die je nach Bedarf mit paketierten Nachrichten belegt werden; ist gerade keine Nutzinformation zu übermitteln, so werden spezielle Leerzellen übertragen. In ATM-Vermittlungsstellen werden virtuelle Verbindungen aufgebaut, d.h. Verbindungen, die nur dann einen Wegeabschnitt tatsächlich benutzen, wenn über diesen tatsächlich ein Nachrichtenpaket (Block) zu übermitteln ist, wobei jedes Paket in seinem Kopf u.a. eine z.B. 2 Oktetts umfassende Adresse zur eindeutigen Zuordnung des Pakets zu einer bestimmten virtuellen Verbindung enthält. Dabei kann jedes Paket am Eingang zur Koppelanordnung nach Maßgabe der jeweiligen Wohlinformation die komplette Information für seinen Weg durch die Koppelanordnung erhalten; mit Hilfe dieser Information schalten die Koppelelemente dann das Paket auf dem festgelegten Weg selbst durch (self-routing network) (siehe z.B. telcom report 11(1988)6, 210...213).

Als Koppelanordnung kann dabei eine zweistufige Umkehr-Koppelanordnung mit (32x32)-Koppelvielfachen vorgesehen sein, die ihrerseits jeweils aus vier mit (16x8)-Koppelelementen gebildeten Koppelpyramiden gebildet sein können (siehe z.B. ISS'90 Proceedings Vol.1, Paper A2.3, Fig.10); bei einer größeren Anzahl anzuschließender Ein- bzw. Ausgänge (Ports) wird man stattdessen eine gestreckte dreistufige Koppelanordnung vorsehen.

Da Vermittlungseinrichtungen einen praktisch unterbrechungsfreien Vermittlungsbetrieb gewährleisten müssen, wird man mindestens zwei redundante Koppelebenen vorsehen, d.h. man wird die Koppelanordnung doppeln (siehe z.B. EP-A1-0 384 936).

Bei der Einrichtung von Vermittlungsstellen ist es nun vielfach so, daß - bei zunächst begrenzter Teilnehmeranzahl - zunächst noch keine voll ausgebaute Koppelanordnung benötigt wird, daß vielmehr zunächst eine nur teilausgebaute Koppelanordnung genügt, die dann später zu einer vollausgebauten Koppelanordnung erweitert werden kann. Um eine solche Erweiterung ohne Betriebsunterbrechung vornehmen zu können, sieht man jedoch in der Regel bei einer dreistufigen gestreckten Koppelanordnung auch bei deren Teilausbau bereits von vornherein eine vollausgebaute mittlere Koppelstufe vor; zur Erweiterung werden dann lediglich Koppelvielfache in der ersten und dritten Koppelstufe bis zu deren Vollausbau hinzugefügt und über entsprechende Zwischenleitungen mit den Koppelvielfachen der mittleren Koppelstufe verbunden. Die schon bei einem Teilausbau der Koppelanordnung vorgesehenen, aber noch nicht benötigten Koppelvielfache der mittleren Koppelstufe stellen bis dahin eine ungenutzte Vorleistung dar.

Die Erfindung zeigt nun einen Weg zu einer dreistufigen gedoppelten ATM-Koppelanordnung voller Erreichbarkeit, die ohne Betriebsunterbrechung auch ohne eine derartige Vorleistung erweitert werden kann.

Die Erfindung betrifft eine gestreckte dreistufige, zumindest gedoppelte ATM-self-routing-Koppelanordnung, in der jedes Koppelvielfach der bei Vollausbau der Koppelanordnung jeweils a Koppelvielfache umfassenden ersten und dritten Koppelstufe mit p Eingangsports oder Ausgangsports und mit z Zwischenleitungen und jedes Koppelvielfach der mittleren Koppelstufe mit 2x2n Zwischenleitungen beschaltbar ist, wobei jedes Koppelvielfach der bei Vollausbau der Koppelanordnung b Koppelvielfache umfassenden mittleren Koppelstufe über wenigstens eine Zwischenleitung mit jedem Koppelvielfach der ersten bzw. dritten Koppelstufe verbunden ist. Eine derartige Koppelanordnung ist bereits aus EP-A-0 384 961 bekannt.

Die erfindungsgemäße Koppelanordnung ist dadurch gekennzeichnet, daß bei Beschaltung jedes Koppelvielfachs der mittleren Koppelstufe mit $2^k$ Gruppen von Zwischenleitungen (mit k = ...,2,1,0) jedes Koppelvielfach der mittleren Koppelstufe mit jedem Koppelvielfach jeder benachbarten Koppelstufe über jeweils wenigstens eine Zwischenleitung jeder dieser $2^k$ Gruppen von Zwischenleitungen verbunden ist,

daß bei Teilausbau der Koppelanordnung die mittlere Koppelstufe lediglich $\frac{b}{t}$ Koppelvielfache mit t = $2^j$ und j = ...,2,1) aufweist, die mit jedem von maximal $\frac{b}{t}$ Koppelvielfachen jeder benachbarten Koppelstufe jeweils über t Gruppen von Zwischenleitungen verbunden sind, von denen bei einer Erweiterung der Koppelanordnung auf $\frac{b}{e}$ Koppelvielfache in der mittleren Koppelstufe und maximal $\frac{b}{e}$ Koppelvielfache in der jeweils benachbarten Koppelstufe zwischen den zuvor vorhandenen Koppelvielfachen jeweils lediglich e Gruppen von Zwischenleitungen (mit e = $2^i$ und i = ..., 2,1,0; 1<j) verbleiben, die durch die zuvor vorhandenen Koppelvielfache der mittleren Koppelstufe mit hinzukommenden Koppelvielfachen der ersten bzw. dritten Koppelstufe verbindende Zwischenleitungen aufgefüllt werden, und weitere t-e Gruppen die hinzugefügten Koppelvielfache der mittleren Koppelstufe mit den zuvor vorhandenen Koppelvielfachen jeder benachbarten Koppelstufe ebenfalls jeweils über e Gruppen Zwischenleitungen verbinden, deren Anschlußlagen in den durch sie miteinander verbundenen Koppelvielfachen den Anschlußlagen gleich sind, die die nicht zwischen zuvor vorhandenen Koppelvielfachen verbliebenen Zwischenleitungen in den durch diese miteinander im vorherigen Teilausbauzustand verbundenen Koppelvielfachen hatten, und die in entsprechender Weise durch die hinzugefügten Koppelvielfache der mittleren Koppelstufe mit hinzukommenden Koppelvielfachen der ersten bzw. dritten Koppelstufe verbindende Zwischenleitungen aufgefüllt werden,
und daß in jedem Koppelvielfach der mittleren Koppelstufe für jede bei einer Erweiterung der Koppelanordnung andauernde Verbindung nur Zwischenleitungen einundderselben Gruppe von Zwischenleitungen belegt werden.

Die Erfindung bringt den Vorteil mit sich, bei einem Teilausbau der Koppelanordnung auch die mittlere Koppelstufe nicht von vornherein voll ausbauen zu müssen und dennoch eine Erweiterung (durch Nachrüsten sowohl der ersten und dritten Koppelstufe als auch der mittleren Koppelstufe) bei unveränderten, für beide (Redundanz-)Ebenen der gedoppelten Koppelanordnung identischen Self-Routing-Headern ohne Betriebsunterbrechung und damit ohne Verlust gerade bestehender Verbindungen vornehmen zu können, indem in weiterer Ausgestaltung der Erfindung zunächst die eine (Redundanz-)Ebene der gedoppelten Koppelanordnung außer Betrieb genommen und durch Hinzufügen von Koppelvielfachen in der mittleren Koppelstufe und Verbinden jedes hinzugefügten Koppelvielfachs der mittleren Koppelstufe mit jedem Koppelvielfach der ersten bzw. dritten Koppelstufe über jeweils wenigstens eine Zwischenleitung wenigstens einer Gruppe von Zwischenleitungen,
deren Anschlußlagen in den durch sie miteinander verbundenen Koppelvielfachen den Anschlußlagen der bei der Erweiterung nicht zwischen zuvor vorhandenen Koppelvielfachen verbleibenden Zwischenleitungen in den durch diese im vorherigen Teilausbauzustand miteinander verbundenen Koppelvielfachen gleich sind,
erweitert wird und daß nach ihrer Wiederinbetriebnahme die gleichen Vorgänge bei der (den) anderen (Redundanz-)Ebene(n) der Koppelanordnung durchgeführt werden.
Weitere Besonderheiten der Erfindung werden aus der nachfolgenden näheren Erläuterung der Erfindung anhand der Zeichnungen ersichtlich. Dabei zeigen

FIG 1, FIG 2 und FIG 3 ein Ausführungsbeispiel für eine gestreckte dreistufige ATM-Koppelanordnung im Zustand eines Teilausbaus (FIG 1) und nach einer Erweiterung (FIG 2 und FIG 3);
FIG 4, FIG 5, FIG 6 und FIG 7 zeigen weitere derartige Koppelanordnungen unterschiedlichen Ausbauzustands.

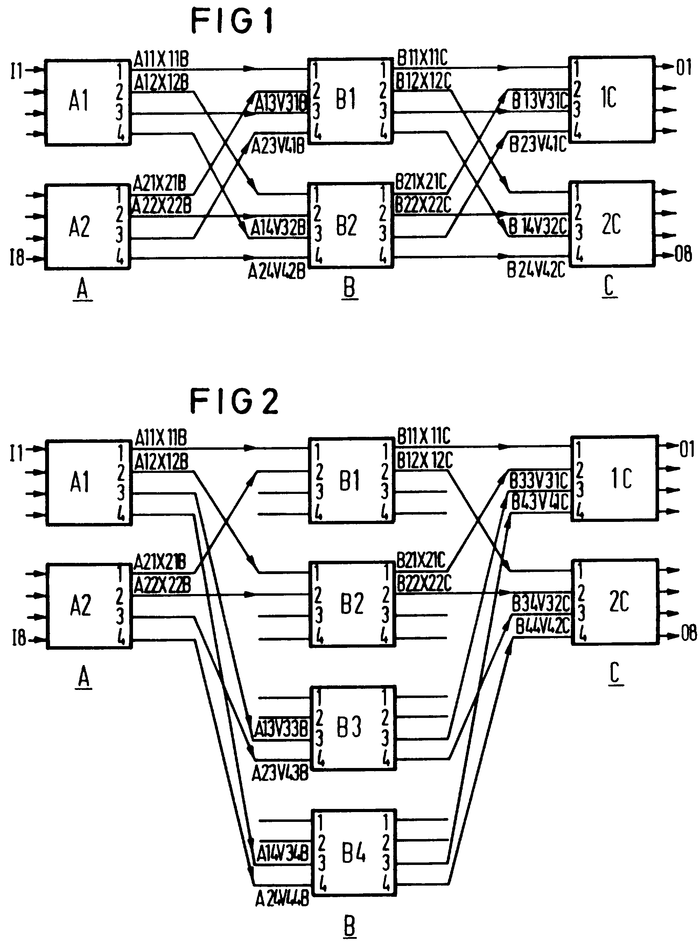

Die in FIG 1 skizzierte ATM-Umkehr-Koppelanordnung weist eine im Teilausbauzustand mit $\frac{b}{t}$ Koppelvielfachen (mit $t = 2^j$ und $j = ..., 2, 1$), im Beispiel mit $\frac{b}{t} = \frac{b}{2} = 2$ Koppelvielfachen A1, A2 bestückte erste Koppelstufe A, eine mit $\frac{b}{t}$ Koppelvielfachen, im Beispiel mit $\frac{b}{t} = \frac{b}{2} = 2$ Koppelvielfachen B1, B2, bestückte mittlere Koppelstufe B und eine ebenfalls mit $\frac{b}{t} = 2$ Koppelvielfachen 1C, 2C bestückte dritte Koppelstufe C auf; dabei sind die Koppelvielfache der besseren Übersichtlichkeit halber als (4x4)-Koppelvielfache dargestellt. In der Praxis können in der mittleren Koppelstufe B beispielsweise (32x32)-Koppelvielfache mit jeweils 32 Eingängen und 32 Ausgängen vorgesehen sein, die als sog. SM32-Module aus vier mit sog. (16x8)-Koppelelementen gebildeten Koppelpyramiden gebildet sein können, wie sie z.B. aus ISS'90 Proceedings Vol.I, p.105..110, Figure 10, bekannt sind; in den äußeren Koppelstufen A und C können die einerseits mit einer der Anzahl der B-Koppelvielfache entsprechenden Anzahl von Zwischenleitungen beschalteten Koppelvielfache andererseits mit einer demgegenüber geringeren, beispielsweise den Prinzipien einer Closschen Koppelanordnung entsprechenden Anzahl von Eingangsports bzw. Ausgangsports zu beschalten sein. Gemäß FIG 1 ist jedes Koppelvielfach A1,A2 der A-Koppelstufe A mit p = 4 Eingangsports I1,...,I8 und mit z = 4 Zwischenleitungen beschaltet, und jedes Koppelvielfach 1C, 2C der C-Koppelstufe C ist mit p=4 Ausgangsports OI,...,O8 und mit z=4 Zwischenleitungen beschaltet; jedes Koppelvielfach B1 und B2 der B-Koppelstufe B ist gemäß FIG 1 mit $2^k$ Gruppen von Zwischenleitungen (mit k = ..., 2, 1, 0) beschaltet, im Beispiel mit $2^k = 2^l = 2$ Gruppen (X und V) von Zwischenleitungen A11X11B, A21X21B, B11X11C, B12X12C; A13V31B, A23V41B, B13V31C, B14V32C; bzw. A12X12B, A22X22B, B21X21C, B22X22C; A14V32B, A24V42B, B23V41C, B23V42C. Dabei ist jedes Koppelvielfach (z.B. B1) der B-Koppelstufe B mit jedem Koppelvielfach (z.B. A1 und 2C) der A-Koppelstufe A und der C-Koppelstufe C über jeweils wenigstens eine Zwischenleitung (im Beispiel A11X11B und B12X12C sowie A13V31B und B14V32C) jeder von $t = 2^l = 2$ Gruppen (X und V) von Zwischenleitungen verbunden, wobei der besseren Übersichtlichkeit halber in der in FIG 1 skizzierten Koppelanordnung jedes Koppelvielfach der B-Koppelstufe B mit jedem Koppelvielfach jeder benachbarten Koppelstufe A und C über jeweils gerade eine Zwischenleitung (A11X11B und B12X12C sowie A13V31B und B14V32C) jeder Gruppe (X und V) von Zwischenleitungen verbunden ist.
Es sei bemerkt, daß FIG 1 nur die eine (Redundanz-)Ebene einer zwei oder mehrerer solcher paralleler Ebenen aufweisenden, d.h. gedoppelten oder mehrfach redundanten Koppelanordnung zeigt, deren einzelne (Redundanz-)Ebenen jeweils den vollen Verkehr tragen können und jeweils ohne Betriebsunterbrechung ab- und eingeschaltet werden können; von einer Zubringerleitung her zugeführte Nachrichtenpakete (ATM-Zellen), denen dabei jeweils vor der Koppelanordnung die volle Wegeinformation zugefügt wurde, können dabei nach ihrer entsprechenden Duplizierung bzw. Vermehrfachung über die zueinander parallelen Koppelanordnungs-Ebenen zu der für die jeweilige virtuelle Verbindung in Frage kommenden Abnehmerleitung hin übertragen und dort wieder auf jeweils eine ATM-Zelle zurückgeführt werden, wie dies an sich (aus EP-A1-0 384 936) bekannt ist und daher hier nicht näher erläutert zu werden braucht. Dazu sei besonders bemerkt, daß bei der Wegesuche in der Koppelanordnungs-(Redundanz-)Ebene für jede Verbindung zweier Ein- bzw. Ausgangsports, beispielsweise der Ports I1 und O8, im jeweiligen Koppelvielfach der B-Koppelstufe B, beispielsweise im Koppelvielfach B1, ggf. nur Zwischenleitungen einundderselben Gruppe von Zwischenleitungen belegt werden, im Beispiel die Zwischenleitungen A11X11B und B12X12C (oder die Zwischenleitungen A13V21C und B14V32C).

Eine Erweiterung der in FIG 1 skizzierten Koppelanordnung ist dann erforderlich, wenn alle Eingangsports I1,...,I8 der A-Koppelstufe A und Ausgangsports O1,...,O8 der C-Koppelstufe C beschaltet sind und ein weiterer Ausbau gefordert wird. Die Erfindung ermöglicht nun eine Ver($2^{j-i}$)fachung (mit j = ..., 2, 1 und i = ..., 1,0) der Koppelvielfache der B-Koppelstufe B, d.h. eine - ggf. auch mehrfache - Verdoppelung der Koppelvielfach-Anzahl, bei gleichzeitiger - ggf. auch mehrfacher - Halbierung der Anzahl der Zwischenleitungs-Gruppen und Auffüllung der Zwischenleitungs-Gruppen zwischen A-Koppelstufe, B-Koppelstufe und C-Koppelstufe, wonach A-Koppelstufe und C-Koppelstufe dem aktuellen Bedarf entsprechend nachgerüstet werden können:

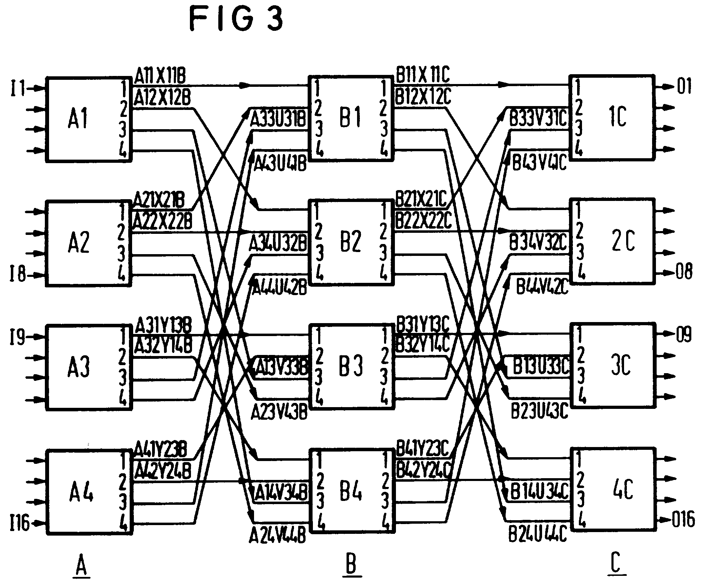

Bei einer Erweiterung der Koppelanordnung von im Beispiel gemäß FIG 1 acht Eingangs- bzw. Ausgangsports I1,...,I8 bzw. O1,...,O8 auf im Beispiel gemäß FIG 3 maximal jeweils sechzehn Ports I1,... I8,I9, . .I16 und O1,...,O8,O9, ...,O16 können zu den zunächst zwei Koppelvielfachen A1,A2 bzw. 1C,2C (in FIG 1 und FIG 2) der A- bzw. C-Koppelstufe maximal zwei weitere Koppelvielfache A3,A4 bzw. 3C,4C (in FIG 2) hinzukommen, nachdem zuvor entsprechende Koppelvielfache B3, B4 (in FIG 2) in der B-Koppelstufe B hinzugefügt worden sind.

Waren zuvor, beim Teilausbau der Koppelanordnung gemäß FIG 1, die $\frac{b}{t}$ = 2 Koppelvielfache B1, B2 der B-Koppelstufe mit jedem der jeweils $\frac{b}{t}$ = 2 Koppelvielfache A1,A2 und 1C,2C der Koppelstufen A und C jeweils über t = 2 Gruppen (X, V) von Zwischenleitungen verbunden, so verbleiben von diesen bei einer Erweiterung der Koppelanordnung auf $\frac{b}{e}$ Koppelvielfache in der B-Koppelstufe (mit e = $2^i$ und i = ..., 2, 1, 0; i<j) und maximal $\frac{b}{e}$ Koppelvielfache in der A-Koppelstufe und in der C-Koppelstufe zwischen den zuvor vorhandenen Koppelvielfachen lediglich e Gruppen von Zwischenleitungen, die dabei durch Zwischenleitungen aufzufüllen sind, welche die zuvor vorhandenen Koppelvielfache B1, B2 der B-Koppelstufe mit hinzukommenden Koppelvielfachen der A - bzw. C-Koppelstufe verbinden. Im Ausführungsbeispiel gemäß FIG 3 ist e = 1, (was zugleich bedeutet, daß die skizzierte Koppelanordnung ihren Vollausbau erreicht,) und es verbleibt somit zwischen den zuvor vorhandenen Koppelvielfachen A1,A2; B1,B2; 1C,2C lediglich 1 Gruppe (X+U) von Zwischenleitungen A11X11B, ..., B22X22C, die dabei durch Zwischenleitungen A33U31B, A43U41B; B13U33C, B14U34C; bzw. A34U32B, A44U42B; B23U43C, B24U44C aufgefüllt ist, welche die zuvor vorhandenen Koppelvielfache B1 und B2 der B-Koppelstufe mit gemäß FIG 3 hinzukommenden Koppelvielfachen A3,A4; 3C,4C der benachbarten A-Koppelstufen A und C verbinden.

Weitere t-e Zwischenleitungs-Gruppen verbinden die hinzugefügten Koppelvielfache der B-Koppelstufe mit jedem Koppelvielfach jeder benachbarten Koppelstufe A bzw. C ebenfalls jeweils über e Gruppen von Zwischenleitungen, deren Anschlußlagen dabei in den durch sie miteinander verbundenen Koppelvielfachen gleich den Anschlußlagen sind, die die bei der Erweiterung nicht zwischen zuvor vorhandenen Koppelvielfachen verbleibenden Zwischenleitungen in den durch diese im vorherigen Teilausbauzustand miteinander verbundenen Koppelvielfachen hatten. In dem Ausführungsbeispiel gemäß FIG 2 verbinden die Zwischenleitungen A13V33B, A23V43B, A14V34B, A24V44B und B33V31C, B34V32C, B43V41C, B44V42C die hinzugefügten Koppelvielfache B3 und B4 der B-Koppelstufe mit den schon zuvor vorhandenen Koppelvielfachen A1,A2 und 1C,2C der A-bzw. C-Koppelstufe, wobei die Anschlußlagen in den durch diese Zwischenleitungen miteinander verbundenen Koppelvielfachen, beispielsweise für die Zwischenleitung A14V34B die Anschlußlage 4 im Koppelvielfach A1 und die Anschlußlage 3 im Koppelvielfach B4, gleich den Anschlußlagen 4 (im Koppelvielfach A1) und 3 (im Koppelvielfach B2) sind, die die entsprechende Zwischenleitung (im Beispiel die Zwischenleitung A14V32B) in den durch diese im vorherigen Teilausbauzustand miteinander verbundenen Koppelvielfachen, im Beispiel den Koppelvielfachen A1 und B2, hatte. Die Wegeinformation (self-routing-header) der einzelnen Zellen ist dabei für die einzelnen Zwischenleitungen ..V.. vor und nach der Erweiterung jeweils die gleiche.

Wenn gemäß FIG 3 in der A- und C-Koppelstufe Koppelvielfache A3, A4, bzw. 3C,4C hinzukommen, ist die die Zwischenleitungen ..V.. enthaltende Zwischenleitungs-Gruppe (V+Y) in entsprechender Weise durch die gemäß FIG 2 hinzugefügten Koppelvielfache der B-Koppelstufe mit den gemäß FIG 3 hinzukommenden Koppelvielfachen der A- bzw. C-Koppelstufe verbindende Zwischenleitungen aufzufüllen; im Ausführungsbeispiel gemäß FIG 3 sind dies die Zwischenleitungen A31Y13B,A41Y23B, A32Y14B,A42Y24B und B31Y13C,B32Y14C, B41Y23C, B42Y24C.

Bei einer Koppelanordnung mit einer Mehrzahl von (Redundanz-) Ebenen, von denen eine in den Zeichnungen FIG 1, FIG 2 und FIG 3 angedeutet ist, verläuft eine Erweiterung dann in folgender Weise: Ausgehend davon, daß bei der im übrigen in an sich bekannter Weise vorzunehmenden Wegesuche in jedem Koppelvielfach der B-Koppelstufe zumindest für jede zeitlich in die Erweiterungsphase hineinreichende Verbindung, d.h.

für semipermanente Verbindungen von vornherein und für die übrigen Verbindungen zumindest rechtzeitig vor dem Eintritt in die Erweiterungsphase, nur Zwischenleitungen einundderselben Gruppe (X) von Zwischenleitungen (A11X11B,... ,B12X12C; A12X12B, ..., B22X22C in FIG 1 und FIG 2; oder A13V31B,..., A24V42B; B13V31C,...,B24V42C in FIG 1 und A13V33B,... ,A24V44B; B33V31C,...,B44V42C in FIG 2) belegt werden, wird zunächst eine (Redundanz-)Ebene der Koppelanordnung außer Betrieb genommen, während die andere(n) Ebene(n) ohne eine Betriebsunterbrechung weiterarbeiten kann (können). In der abgeschalteten (Redundanz-)Ebene können dann die zusätzlichen Koppelvielfache (B3, B4 in FIG 2) der B-Koppelstufe B eingebaut und die Zwischenleitungsverkabelung rekonfiguriert werden, wie dies prinzipiell aus FIG 2 ersichtlich ist. In dem hier gezeigten Beispiel werden die Zwischenleitungen der Gruppe X zwischen den Koppelvielfachen A1,A2 der A-Koppelstufe bzw. 1C,2C der C-Koppelstufe und den Koppelvielfachen B1, B2 der B-Koppelstufe beibehalten, während die Zwischenleitungen der Gruppe V nunmehr die Koppelvielfache A1, A2 der A-Koppelstufe bzw. 1C,2C der C-Koppelstufe mit den hinzugekommenen Koppelvielfachen B3, B4 der B-Koppelstufe verbinden, wobei die Anschlußlagen in den durch diese Zwischenleitungen miteinander verbundenen Koppelvielfachen, beispielsweise für die Zwischenleitung B43V41C die Anschlußlage 3 im Koppelvielfach B4 und die Anschlußlage 4 im Koppelvielfach 1C, gleich den Anschlußlagen 3 (im Koppelvielfach B2) und 4 (im Koppelvielfach 1C) sind, die die entsprechende Zwischenleitung (im Beispiel die Zwischenleitung B23V41C) in den durch diese im vorherigen Teilausbauzustand miteinander verbundenen Koppelvielfachen, im Beispiel den Koppelvielfachen B2 und 1C, hatte. Danach - und nach einem ggf. durchgeführten Off-Line-Test - kann die erweiterte (Redundanz-)Ebene der Koppelanordnung wieder in Betrieb genommen werden, und die gleiche Prozedur kann für die zweite (und danach für jede etwaige weitere) Redundanz-Ebene durchgeführt werden.

Da sich die routing-Informationen für die einzelnen Nutzverbindungen mit der neuen Konfiguration nicht ändern, sind aus der Sicht der vermittlungsseitigen Steuerung teilausgebaute und erweiterte Konfiguration gleich für alle Koppelvielfache (A1,A2; 1C,2C) der A- bzw. C-Koppelstufe, die schon vor der Erweiterung vorhanden waren, und es können während der Erweiterungsphase auch Verbindungen auf- und abgebaut werden.

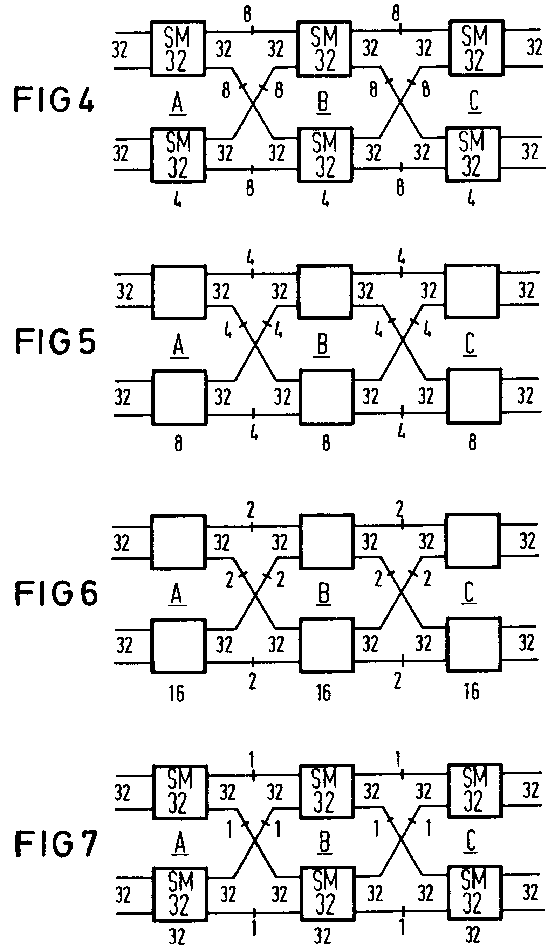

Abschließend sei noch folgendes bemerkt. Im vorstehenden wird die Erfindung anhand der FIG 1 bis FIG 3 am Beispiel einer Erweiterung der Koppelanordnung auf das Doppelte erläutert, womit im Ausführungsbeispiel zugleich der Vollausbau der Koppelanordnung erreicht wird. In entsprechender Weise kann eine Koppelanordnung aber auch von einem niedrigeren Teilausbauzustand aus zunächst in einen höheren Teilausbauzustand erweitert werden, wie dies beispielsweise bei einem Ausbau der in FIG 4 skizzierten Koppelanordnung mit maximal 128 Eingangsports und 128 Ausgangsports auf die in FIG 5 skizzierte Koppelanordnung mit maximal 256 Eingangsports und 256 Ausgangsports der Fall ist, oder es kann die Koppelanordnung auch gleich um mehr als eine 2er-Potenz erweitert werden, wie dies bei einem Ausbau der in FIG 4 skizzierten Koppelanordnung mit maximal 512 Eingangsports und 512 Ausgangsports oder auf die in FIG 7 skizzierte Koppelanordnung mit maximal 1024 Eingangsports und 1024 Ausgangsports der Fall ist. Dabei verringert sich die Anzahl der zwischen den einzelnen Koppelstufen A,B,C verlaufenden Zwischenleitungsgruppen jeweils mit einer entsprechenden Anzahl von 2er-Potenzen, wie dies ebenfalls in FIG 4 bis FIG 7 angedeutet ist.

**Patentansprüche**

1. Dreistufige, zumindest gedoppelte ATM-self-routing-Koppelanordnung,

in der jedes Koppelvielfach (A1,...) der bei Vollausbau der Koppelanordnung jeweils a Koppelvielfache umfassenden ersten und dritten Koppelstufe (A bzw. C) mit p Eingangsports oder Ausgangsports und mit z Zwischenleitungen und jedes Koppelvielfach (B1, ...) der mittleren Koppelstufe (B) mit 2x2n Zwischenleitungen beschaltbar ist,
wobei jedes Koppelvielfach (B1,...) der bei Vollausbau der Koppelanordnung b Koppelvielfache umfassenden mittleren Koppelstufe (B) über wenigstens eine Zwischenleitung (A11X11B,...) mit jedem Koppelvielfach (A1,...) der ersten bzw. dritten Koppelstufe (A bzw. C) verbunden ist,
**dadurch gekennzeichnet,**
daß bei Beschaltung jedes Koppelvielfachs (B1,...) der mittleren Koppelstufe (B) mit $2^k$ Gruppen (X;V) von Zwischenleitungen (A11X11B,...) (mit k = ...,2,1,0) jedes Koppelvielfach (B1,...) der mittleren Koppelstufe (B) mit jedem Koppelvielfach (A1,...; 1C,...) jeder benachbarten Koppelstufe (A,C) über jeweils wenigstens eine Zwischenleitung (A11X11B, B11X11C; A13V31B, B13V31C) jeder dieser $2^k$ Gruppen (X;V) von Zwischenleitungen verbunden ist,

daß bei Teilausbau der Koppelanordnung die mittlere Koppelstufe (B) lediglich $\frac{b}{t}$ Koppelvielfache (B1;B2) (mit t = $2^j$ und j = ..., 2,1) aufweist, die mit jedem von maximal $\frac{b}{t}$ Koppelvielfachen (A1,...,A2; 1C,...,2C) jeder benachbarten Koppelstufe (A,C) jeweils über t Gruppen (X;V) von Zwischenleitungen verbunden sind, von denen bei einer Erweiterung der Koppelanordnung auf $\frac{b}{e}$ Koppelvielfache (B1,...B4) in der mittleren Koppelstufe (B) und maximal $\frac{b}{e}$ Koppelvielfache (A1,...A4; 1C,...,4C) in der jeweils benachbarten Koppelstufe (A,C)

zwischen den zuvor vorhandenen Koppelvielfachen (A1,A2; B1,B2; 1C,2C) jeweils lediglich e Gruppen (X+U) von Zwischenleitungen (mit $e = 2^i$ und $i = ...,2,1,0$; $i<j$) verbleiben, die durch die zuvor vorhandenen Koppelvielfache (B1, B2) der mittleren Koppelstufe (B) mit hinzukommenden Koppelvielfachen (A3,A4;3C,4C) der ersten bzw. dritten Koppelstufe (A bzw. C) verbindende Zwischenleitungen (A..U.1B, B1.U..C; A..U.2B, B2.U..C) aufgefüllt werden,

und weitere t-e Gruppen (V+Y) die hinzugefügten Koppelvielfache (B3,B4) der mittleren Koppelstufe (B) mit den zuvor vorhandenen Koppelsvielfachen (A1,A2; 1C,2C) jeder benachbarten Koppelstufe (A,C) ebenfalls jeweils über e Gruppen von Zwischenleitungen (A14V34B, B43V41C) verbinden, deren Anschlußlagen (4,3,3,4) in den durch sie miteinander verbundenen Koppelvielfachen (A1,B4,B4,1C) den Anschlußlagen (4,3,3,4) gleich sind, die die nicht zwischen zuvor vorhandenen Koppelvielfachen verbliebenen Zwischenleitungen (A14V32B, B23V41C) in den durch diese miteinander im vorherigen Teilausbauzustand verbundenen Koppelvielfachen (A1,B2, B2,1C) hatten, und die in entsprechender Weise durch die hinzugefügten Koppelvielfache (B3,B4) der mittleren Koppelstufe (B) mit hinzukommenden Koppelvielfachen (A3,A4; 3C,4C) der ersten bzw. dritten Koppelstufe (A bzw. C) verbindende Zwischenleitungen (A..Y.3B, B3.Y..C; A..Y.4B, B4.Y..C) aufgefüllt werden,

und daß in jedem Koppelvielfach (B1,...) der mittleren Koppelstufe (B) für jede bei einer Erweiterung der Koppelanordnung andauernde Verbindung nur Zwischenleitungen (A11X11B, B12X12C) einundderselben Gruppe (X) von Zwischenleitungen belegt werden.

2. Dreistufige, zumindest gedoppelte ATM-self-routing-Koppelanordnung nach Anspruch 1, **dadurch gekennzeichnet,** daß in jedem Koppelvielfach (B1,...) der mittleren Koppelstufe (B) für die einzelnen Verbindungen jeweils nur Zwischenleitungen (A11X11B, B12X12C) einundderselben Gruppe (X) von Zwischenleitungen belegt werden.

3. Verfahren zur Erweiterung einer dreistufigen, zumindest gedoppelten ATM-Koppelanordnung nach Anspruch 1 oder 2,

   **dadurch gekennzeichnet,** daß zunächst die eine (Redundanz-)Ebene der gedoppelten Koppelanordnung außer Betrieb genommen und durch Hinzufügen von $(\frac{b}{e}-\frac{b}{t})$ Koppelvielfachen (B3,B4) in der mittleren Koppel(B) und Verbinden jedes hinzugefügten Koppelvielfachs (B3, B4) der mittleren Koppelstufe (B) mit jedem Koppelvielfach (A1, ...A4; 1C,...4C) der ersten bzw. dritten Koppelstufe (A;C) über jeweils wenigstens eine Zwischenleitung wenigstens einer Gruppe (X+U,V+Y) von Zwischenleitungen,

deren Anschlußlagen (4,3,3,4) in den durch sie miteinander verbundenen Koppelvielfachen (A1,B4,B4,1C) den Anschlußlagen (4, 3,3,4) der bei der Erweiterung nicht zwischen zuvor vorhandenen Koppelvielfachen verbleibenden Zwischenleitungen (A14V32B, B23V41C) in den durch diese im vorherigen Teilausbauzustand miteinander verbundenen Koppelvielfachen (A1,B2,B2,1C) gleich sind,

erweitert wird und daß nach ihrer Wiederinbetriebnahme die gleichen Vorgänge bei der (den) anderen (Redundanz-)Ebene(n) der Koppelanordnung durchgeführt werden.

**Claims**

1. Three-stage, at least duplicated ATM self-routing switching arrangement,

   in which each switching matrix (A1,...) of the first switching stage and third switching stage (A and C respectively), comprising in each case a switching matrixes in the maximum configuration of the switching arrangement, can be connected to p input ports or output ports and to z links, and each switching matrix (B1,...) of the middle switching stage (B) can be connected to 2x2n links,

   each switching matrix (B1,...) of the middle switching stage (B), comprising b switching matrixes in the maximum configuration of the switching arrangement, being connected via at least one link (A11X11B,...) to each switching matrix (A1,...) of the first switching stage and third switching stage (A and C respectively),

   characterized in that if each switching matrix (B1,...) of the middle switching stage (B) is connected to $2^k$ groups (X;V) of links (A11X11B,...) (where $k = ...,2,1, 0$), each switching matrix (B1,...) of the middle switching stage (B) is connected to each switching matrix (A1,...; 1C,...) of each neighbouring switching stage (A,C) via in each case at least one link (A11x11B, B11X11C; A13V31B, B13V31C) of each of said $2^k$ groups (X;V) of links,

   in that, with a partial configuration of the switching arrangement, the middle switching stage (B) has only $\frac{b}{t}$ switching matrixes (B1;B2) (where t = $2^j$ and j = ...,2,1) which are connected to each of a maximum of $\frac{b}{t}$ switching matrixes (A1,...,A2; 1C,...,2C) of each neighbouring switching stage (A,C) in each case via t groups (X;V) of links, of which, when the switching arrangement is extended to $\frac{b}{e}$ switching matrixes (B1,...B4) in the middle switching stage (B) and a maximum of $\frac{b}{e}$ switching matrixes (A1,...A4; 1C,...,4C) in the respective neighbouring switching stage (A,C),

in each case only e groups (X+U) of links (where e = $2^i$ and i = ...,2,1,0; i<j) remain between the previously present switching matrixes (A1,A2; B1,B2; 1C,2C), which groups are filled by links (A..U.1B, B1.U.. C; A..U.2B, B2.U..C) connecting previously present switching matrixes (B1, B2) of the middle switching stage (B) to additional switching matrixes (A3,A4;3C,4C) of the first switching stage and third switching stage (A and C respectively),

and further t-e groups (V+Y) connect the added switching matrixes (B3,B4) of the middle switching stage (B) to the previously present switching matrixes (A1,A2; 1C,2C) of each neighbouring switching stage (A,C) likewise in each case via e groups of links (A14V34B, B43V41C), whose connection positions (4,3, 3,4) in the switching matrixes (A1,B4,B4,1C) interconnected by them are the same as the connection positions (4,3,3,4) which the links (A14V32B, B23V41C) not remaining between previously present switching matrixes had in the switching matrixes (A1,B2,B2,1C) interconnected by them in the previous partial configuration state, and which are filled analogously by links (A..Y.3B, B3.Y..C; A..Y.4B, B4.Y..C) connecting added switching matrixes (B3,B4) of the middle switching stage (B) to additional switching matrixes (A3,A4; 3C,4C) of the first switching stage and third switching stage (A and C respectively),

and in that only links (A11X11B, B12X12C) of one and the same group (X) of links are occupied in each switching matrix (B1,...) of the middle switching stage (B) for each continuing connection when the switching arrangement is extended.

2. Three-stage, at least duplicated ATM self-routing switching arrangement according to Claim 1, characterized in that in each case only links (A11X11B, B12X12C) of one and the same group (X) of links are occupied in each switching matrix (B1,...) of the middle switching stage (B) for the individual connections.

3. Method for extending a three-stage, at least duplicated ATM switching arrangement according to Claim 1 or 2, characterized in that firstly the one (redundant) level of the duplicated switching arrangement is taken out of operation and is extended by adding ($\frac{b}{e}-\frac{b}{t}$) switching matrixes (B3,B4) in the middle switching stage (B) and connecting each added switching matrix (B3,B4) of the middle switching stage (B) to each switching matrix (A1,...A4; 1C,...4C) of the first switching stage and third switching stage (A;C) via in each case at least one link of at least one group (X+U,V+Y) of links,

whose connection positions (4,3,3,4) in the switching matrixes (A1,B4,B4,1C) interconnected by them are the same as the connection positions (4,3,3,4) of the links (A14V32B, B23V41C) not remaining between previously present switching matrixes after the extension in the switching matrixes (A1,B2, B2,1C) interconnected by them in the previous partial configuration state,

and in that after it has been put back into operation the same procedures are carried out for the other redundant level(s) of the switching arrangement.

**Revendications**

1. Réseau de connexion ATM à autoacheminement à trois étages, prévu au moins en double,

dans lequel chaque matrice de commutation (A1,...) des premier et troisième étages de connexion (A ou C), qui comprennent chacun a matrices de commutation lorsque le montage du réseau de connexion est complet, peut être raccordée à p ports d'entrée ou ports de sortie et à z lignes intermédiaires, et chaque matrice de commutation (B1,...) de l'étage de connexion médian (B) peut être raccordée à 2x2n lignes intermédiaires, et

dans lequel chaque matrice de commutation (B1,...) de l'étage de connexion médian (B), qui comprend b matrices de commutation lorsque le montage du réseau de connexion est complet, est reliée par l'intermédiaire d'au moins une ligne intermédiaire (A11X11B,...) à chaque matrice de commutation (A1,...) des premier ou troisième étages de connexion (A ou C), caractérisé par le fait que lorsque chaque matrice de commutation (B1,...) de l'étage de connexion médian (B) est raccordée à $2^k$ groupes (X; V) de lignes intermédiaires (A11X11B,...) (avec k=...,2,1,0), chaque matrice de commutation (B1,...) de l'étage de connexion médian (B) est reliée à chaque matrice de commutation (A1, ...; 1C, ...) de chaque étage de connexion voisin (A,C) par l'intermédiaire d'au moins une ligne intermédiaire (A11X11B, B11X11C; A13V31B, B13V31C) de chacun de ces $2^k$ groupes (X;V) de lignes intermédiaires,

lorsque le montage du réseau de connexion est partiel, l'étage de connexion médian (B) ne comporte que b/t matrices de commutation (B1; B2) (avec $t = 2^j$ et $j = ... 2, 1$), qui sont reliées à chacun des matrices de commutation d'au maximum b/t matrices de commutation (A1,..., A2; 1C, ..., 2C) de chaque étage de connexion voisin (A,C) par l'intermédiaire de t groupes (X; V) de lignes intermédiaires, parmi lesquelles, dans le cas d'une extension du réseau de connexion à b/e matrices de commutation (B1,... B4) dans l'étage de connexion médian (B) et à au maximum b/e matrices de commutation (A1,... A4; 1C,...,4C) dans l'étage de connexion voisin (A,C) entre les matrices de commutation (A1, A2; B1, B2; 1C, 2C) présentes auparavant ne subsistent que e groupes (X+U) de lignes intermédiaires (avec $e=2^i$ et $i = ...2,1,0; i < j$), qui sont munies de lignes intermédiaires (A..U.1B, B1.U..C; A..U.2B, B2.U..C), qui relient les matrices de commutation (B1,B2) présentes auparavant, de l'étage de connexion médian (B) à des matrices de commutation (A3,A4; 3C, 4C), qui s'ajoutent, des premier et troisième étages de connexion (A et C), et

t-e autres groupes (V+Y) relient les matrices de commutation ajoutées (B3,B4) de l'étage de connexion médian (B) aux matrices de connexion (A1,A2;1C,2C), qui étaient présents auparavant, de chaque étage de connexion voisin (A,C) également par l'intermédiaire de e groupes de lignes intermédiaires (A14V34B, B43V41C), dont les positions de raccordement (4,3,3,4) dans les matrices de commutation (A1,B4,B4,1C), reliées l'une à l'autre par ces lignes, sont identiques aux positions de raccordement (4,3,3,4), qu'avaient les lignes intermédiaires (A14V32B, B23V41C), qui ne sont pas restées entre des matrices de commutation présentes auparavant, dans les matrices de commutation (A1,B2,B2,1C) reliées l'une à l'autre par ces lignes dans l'état de montage partiel précédent, et qui sont munies de façon adéquate de lignes intermédiaires (A..Y.3B, B3.Y..C; A..Y.4B, B4.Y..C) reliant les matrices de commutation ajoutées (B3,B4) de l'étage de connexion médian (B) à des matrices de commutation (A3,A4;3C,B4) ajoutées, des premier ou troisième étages de connexion (A ou C), et que dans chaque matrice de commutation (B1,...) de l'étage de connexion médian (B), seules des lignes intermédiaires (A11X11B, B12X12C) d'un même groupe (X) de lignes intermédiaires sont réservées à chaque liaison persistant lors d'une extension du réseau de connexion.

2. Réseau de connexion ATM à autoacheminement à trois étages, prévu au moins en double, suivant la revendication 1, caractérisé par le fait que dans chaque matrice de commutation (B1,...) de l'étage de connexion médian (B), seules des lignes intermédiaires (A11X11B, B12X12C) d'un même groupe (X) de lignes intermédiaires sont réservées aux diverses liaisons.

3. Procédé d'extension d'un réseau de connexion ATM à trois étages, prévu au moins en double, suivant la revendication 1 ou 2, caractérisé par le fait qu'on met d'abord hors service un des plans (de redondance) du réseau de connexion en double,

on l'augmente par adjonction de $(\frac{b}{e} - \frac{b}{t})$ matrices de commutation (B3,B4) dans l'étage de connexion médian (B) et par raccordement de chaque matrice de commutation ajoutée (B3,B4) du réseau de connexion médian (B) à chaque matrice de commutation (A1,...A4; AC,...4C) des premier ou troisième étage de connexion (A;C) par l'intermédiaire d'au moins une ligne intermédiaire d'au moins un groupe (X+U, V+Y) de lignes intermédiaires,

dont les positions de raccordement (4,3,3,4) dans les matrices de commutation (A1,B4,B4,1C), reliées l'une à l'autre par ces lignes, sont identiques aux positions de raccordement (4,3,3,4) des lignes intermédiaires (A14V32B,B2341C) qui, lors de l'extension, ne restent pas entre des matrices de commutation présentes auparavant, dans les matrices de commutation (A1,B2,B2,1C) reliées l'une à l'autre par ces lignes dans l'état de montage partiel précédent, et

qu'après remise en service du plan du réseau de connexion, on effectue les mêmes opérations pour le ou les autres plans (de redondance) du réseau de connexion.

# F I G 1

# F I G 2

# FIG 3

FIG 4

FIG 5

FIG 6

FIG 7